(19) Europäisches Patentamt
European Patent Office
Office européen des brevets

(11) **EP 4 484 054 B1**

(12) **EUROPEAN PATENT SPECIFICATION**

(45) Date of publication and mention
of the grant of the patent:
**17.06.2026 Bulletin 2026/25**

(21) Application number: **23803743.6**

(22) Date of filing: **02.05.2023**

(51) International Patent Classification (IPC):
*B23Q 17/00* (2006.01)     *B23Q 1/26* (2006.01)
*B23Q 17/10* (2006.01)     *B23Q 17/12* (2006.01)
*G05B 19/404* (2006.01)     *G01M 1/22* (2006.01)
*G01M 1/32* (2006.01)

(52) Cooperative Patent Classification (CPC):
**G05B 19/404; G01M 1/22; G01M 1/32**

(86) International application number:
**PCT/KR2023/005956**

(87) International publication number:
**WO 2023/219320 (16.11.2023 Gazette 2023/46)**

(54) **DEVICE AND METHOD FOR CORRECTING IMBALANCE OF MACHINE TOOL ROTARY TABLE**

VORRICHTUNG UND VERFAHREN ZUR KORREKTUR DER UNWUCHT EINES
WERKZEUGMASCHINENDREHTISCHES

DISPOSITIF ET PROCÉDÉ DE CORRECTION DU DÉSÉQUILIBRE D'UNE TABLE DE ROTATION
DE MACHINE-OUTIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.05.2022 KR 20220057256**

(43) Date of publication of application:
**01.01.2025 Bulletin 2025/01**

(73) Proprietor: DN Solutions Co., Ltd.
**Changwon-si, Gyeongsangnam-do 51537 (KR)**

(72) Inventors:
• **JANG, Sunghyun**
**Changwon-si, Gyeongsangnam-do 51537 (KR)**
• **JO, Ok Hyun**
**Changwon-si, Gyeongsangnam-do 51537 (KR)**
• **LEE, Changho**
**Changwon-si, Gyeongsangnam-do 51537 (KR)**

(74) Representative: **BCKIP Part mbB
MK1
Landsbergerstraße 98, 3.Stock
80339 München (DE)**

(56) References cited:
CN-A- 1 727 114        CN-A- 110 385 798
JP-A- 2002 178 242      JP-A- 2006 035 360
KR-A- 20200 092 602     KR-B1- 101 654 740
US-A- 5 412 583

**Description**

[Technical Field of the Invention]

The present invention relates to a method of compensating a rotational unbalance of a turntable of a machine tool, and more specifically, to a method of compensating a rotational unbalance of a turntable of a machine tool that detects the rotational unbalance of the turntable, calculates a compensation mass to compensate the detected unbalance, and determines an installation position of the compensation mass, thereby compensating the rotational unbalance of the turntable of the machine tool.

[Background Art]

In general, a multi-tasking machine tool mainly performs a turning work to process a workpiece placed on a table by rotating or moving a spindle mounted with a tool, or a milling work to process the workpiece by moving the table back and forth. Recently, as a machine tool has become more sophisticated, the table on which the workpiece is placed in the machine tool mainly used for the milling work has been configured as a turntable, and it is then possible to perform the turning work by rotating the turntable.

In such a machine tool applied with the turntable, as the turntable rotates, there occurs a rotational imbalance or unbalance due to a mismatch between a rotation center of the turntable and a center of gravity of the workpiece in response to a position of the workpiece mounted on the turntable. Such the rotational unbalance generates vibration in the machine tool including the workpiece, which not only reduces a machining precision of the workpiece, but also causes serious problems in durability of the machine tool.

To solve such a vibration issue caused by the rotational unbalance of the turntable, it may be resolved by identifying a position where the rotational unbalance occurs and an unbalanced mass, and by attaching the same mass onto an opposite position of the turntable where such the rotational unbalance occurs.

As a means of solving the rotational unbalance, a vibration sensor is installed in the machine tool, a magnitude of vibration detected from the vibration sensor is determined to estimate a magnitude of the rotational unbalance, a dummy mass is placed on an opposite side of the turntable where the rotational unbalance occurs, a magnitude of vibration detected from the vibration sensor is determined by rotating the turntable again, and a size and a position of the dummy mass is changed to match the rotational unbalance with an approximate value, thereby correcting or compensating the rotational unbalance of the turntable.

However, this method requires difficult and complex procedures to identify a position where the rotational unbalance occurs and to calculate an unbalance mass each time the workpiece is machined, which deteriorates productivity of the machine tool.

KR20120121489A, as a related art, discloses an eccentricity compensation device to compensate an eccentricity of a rotating body including: a plurality of sensors for measuring a load of the rotating body at a lower portion of the rotating body, a compensation weight for compensating the eccentricity of the rotating body, a control unit for calculating a compensation rotation angle and a compensation movement distance of the compensation weight based on respective load data measured by the plurality of sensors, and a transportation means for moving the compensation weight by the compensation rotation angle and compensation movement distance.

However, such the eccentricity compensation device of the rotating body requires a rotary grinding device, a disc-shaped storage device such as a compact disc player or the like, and at least three load detection sensors at a lower portion of the rotating body to detect the eccentricity of the rotating body in an ultra-light device like a spin coating device for semiconductor elements, thereby measuring the eccentricity of the rotating body through load detection sensors. In view of structures of the turntable of the machine tool, it is not feasible to install several sensors that measure an eccentric load of the turntable at a lower portion of the turntable, so even a person skilled in the art may not easily apply the teaching of KR20120121489A.

Meanwhile, KR101654740B1 discloses an eccentricity compensation method for a turntable of a machine tool including: rotating the turntable at a certain angle, calculating a load amount of the turntable by detecting a rotational torque through a torque sensor, and determining an eccentricity compensation position and an eccentricity amount from the calculated load amount.

However, this method has a problem that rotational torque changes according to the eccentricity of the turntable are very small due to the driving characteristics of the turntable of the machine tool, so it is very inaccurate to determine the eccentricity compensation position and the eccentric amount based on the rotational torque changes.

Further, KR20200092602A discloses that in a tilting motor connected to support and simultaneously drive a turntable in a tilted manner, it detects a load applied to the tilting motor to suppress the rotation of the tilting motor in response to a rotating force exerted in a tilting direction as the turntable rotates, determines that the turntable is in an unbalanced rotating state when the detected load is greater than a predetermined allowable range, and then stops the rotation of the turntable or outputs an alarm signal.

However, KR20200092602A merely discloses detecting the rotational unbalance of the turntable, but does not propose a solution for a compensation method of the rotational unbalance.

US 5 412 583 A discloses a centrifugal balancing apparatus comprising means for rotating a work piece, vibration sensing means, a computer, an electronic interface means, and mark sensing means. The electronic interface means converts outputs of the mark sensing means and the vibration sensing means into digital data representing vibration magnitude and phase. The computer calculates a trial balance weight and weight location on the work piece based on the digital data and work piece mass.

[Disclosure of Invention]

[Technical Problem]

To resolve the problems discussed above, an object of the present invention is to provide a method of compensating a rotational unbalance of a turntable of a machine tool that detects the rotational imbalance or unbalance of the turntable by merely installing minimum detection means at the turntable of the machine tool, and determines a compensation position and a compensation mass to correct or compensate the rotational unbalance based on the detected rotational unbalance.

In addition, another object of the present invention is to provide a method of compensating a rotational unbalance of a turntable of a machine tool that easily calculates a compensation position and a compensation mass when the compensation mass for compensating the rotational unbalance is installed at a plurality of positions according to structures of the turntable.

[Technical Solution]

An apparatus of compensating a rotational unbalance of a turntable of a machine tool according to an exemplary embodiment not forming part of the claimed invention may include: a turntable mounted on an upper portion of a table body of the machine tool through a table motor; a vibration sensor to detect vibration of the turntable and a proximity sensor to detect a number of rotation of the turntable that are installed on one side of the table body; a signal processing unit that analyzes rotational unbalance information of the turntable by analyzing signals detected from the vibration sensor and the proximity sensor; and a control unit including an output part that receives and outputs rotational unbalance information of the turntable from the signal processing unit , and an input and output display part that inputs parameters for compensating rotational unbalance of the turntable in response to the rotational unbalance information and calculates remaining parameters that have not been entered by applying the parameters being input to a predetermined formula and outputs calculated results.

In a preferred embodiment, the signal processing unit may be configured to analyze an unbalance mass generated at a radial distance at a specific phase angle of the turntable when the turntable rotates at a preset reference rotational speed.

In a preferred embodiment, the output part of the control unit may include a turntable display part that displays a rotation unbalance position and a compensation position of the turntable, a phase angle display part that displays an unbalance phase angle and a compensation phase angle, a vibration velocity display part that displays a magnitude of a vibration velocity, a rotational speed display part that displays a rotational speed of the turntable, and an alarm display part that displays an alarm message when a rotational unbalance size of the turntable exceeds a predetermined range.

In a preferred embodiment, the input and output display part of the control unit may be configured to display an unbalance distance corresponding to a radius of the turntable that is input in advance, and an unbalance mass and an unbalance phase angle calculated by the signal processing unit, wherein the parameters to correct or compensate the rotational unbalance may be selectively input from among the compensation distance, the compensation mass and the compensation phase angle, and when one or two parameters among these parameters being input are entered, the other parameters are calculated by pre-stored formulas and output to be displayed.

According to the present invention, to resolve the problems discussed above, a method of compensating a rotational unbalance of a turntable of a machine tool according to claim 1 is provided.

The method according to the present invention includes: a turntable rotation step (S10) that rotates the turntable at a preset reference speed; a signal analysis step (S20) that receives a vibration signal and a number of rotation of the turntable through a vibration sensor and a proximity sensor, converts the vibration signal into a vibration velocity through a signal processing procedure, and calculates a rotational unbalance of the turntable based on the vibration velocity and the number of rotation; a compensation determination step (S30) that compares the vibration velocity analyzed in the signal analysis step (S20) with the preset reference vibration velocity, terminates a compensation work of the rotational unbalance of the turntable when the vibration velocity of the turntable is smaller than the reference vibration velocity, and proceeds a next step for compensating the rotational unbalance of the turntable when the vibration velocity of the turntable is greater than the reference vibration velocity; a rotational unbalance compensation parameter calculation step (S40) that calculates a compensation mass, a compensation distance, and a compensation phase angle for compensating a rotational unbalance amount when the vibration velocity of the turntable is greater than the reference vibration velocity in the compensation determination step (S30); and a rotational unbalance compensation step (S50) that installs the compensation mass on the turntable in response to the compensation mass, the compensation distance, and the compensation phase angle calculated in the rotational unbalance compensation parameter calculation step (S40), and returns to the signal analysis step (S20) by rotating the rotation table at a preset reference speed.

According to the present invention, the rotational unbalance amount of the turntable in the signal analysis step (S20) is calculated using the Formula 1 below.

<Formula 1>

$$U = \alpha_{10}V + \alpha_{01}\Omega + \alpha_{20}V^2 + \alpha_{02}\Omega^2 + \alpha_{11}V\Omega + C$$

where U denotes a rotational unbalance amount [kg · m], V denotes a vibration velocity (1 x RMS value of the component) [m/s], $\Omega$ denotes a rotational speed of the turntable [min$^{-1}$], C denotes a constant, and $\alpha_n$ denotes a coefficient.

According to the present invention, in the rotational unbalance compensation parameter calculation step (S40), the compensation mass is calculated using Formula 2 below, the compensation phase angle is calculated using Formula 3 below, and the compensation distance is defined as a radial distance of the turntable.

<Formula 2>

$$U = m\ r,\ \text{and therefore}\ m = U\ /\ r$$

where U is a rotational unbalance amount [kg m], m is an unbalance mass [kg], and r is a radial distance of the unbalance mass, which is a radial distance of the turntable.

<Formula 3>

$$\varepsilon_0 = -\frac{T_0}{T_T} \times 360 + \theta_v$$

where $\varepsilon_0$ is a phase angle of a compensation mass [deg], $T_0$ is a time difference between maximum peaks of a vibration signal [sec], $T_T$ is a period of one rotation of a turntable [sec], and $\theta_v$ is a shifting phase angle [deg] according to a velocity conversion of acceleration detected by a vibration sensor.

In a preferred embodiment, the compensation mass calculated in the rotational unbalance compensation parameter calculation step (S40) is divided into two positions on the turntable, and a vector sum of the compensation mass divided into two positions is balanced with a rotational unbalance amount.

In a preferred embodiment, dividing of the compensation mass into two positions may include: a first compensation parameter selection step (S41) in which a first compensation mass having a weight smaller than the compensation mass calculated in the signal analysis step (S20) is arbitrarily determined, an angle of an adjacent slot from a position approximately 180 degrees opposite to the unbalance phase angle is determined as a first phase angle, and a first compensation distance for installing the first compensation mass is arbitrarily specified and input; and a second compensation parameter selection step (S42) in which a second compensation mass, a second compensation distance, and a second phase angle are calculated by a predefined formula so that a vector sum with the first compensation mass being input in the first compensation parameter selection step (S41) approaches the rotational unbalance amount.

In a preferred embodiment, the second compensation parameter selection step (S42) may calculate the second compensation mass and the second phase angle by specifying the second compensation distance and inputting the same into a predefined formula.

In a preferred embodiment, the second compensation parameter selection step (S42) may calculate the second compensation distance and the second phase angle by specifying the second compensation mass and inputting the same into a predefined formula.

In a preferred embodiment, the second compensation parameter selection step (S42) may calculate the second compensation distance by specifying the second compensation mass and the second phase angle and inputting the same into a predefined formula.

In a preferred embodiment, the second compensation mass may be selected from among pre-standardized compensation masses, the second phase angle may be selected based on a pre-determined slot of a turntable, and the calculated second compensation distance may be limited to the radial distance of the turntable.

[Advantageous Effects]

The present invention calculates a rotational unbalance amount based on a vibration signal and a rotation signal of a turntable of a machine tool, and calculates a rotational unbalance compensation parameter based on the same, thereby enabling accurate and quick compensation of the rotational unbalance of the turntable of the machine tool.

Further, the present invention compensates the rotational unbalance of the turntable at a time by easily calculating the compensation parameter for at least two positions as well as one position, thereby enabling compensation of the rotational unbalance of the turntable regardless of a structure of the turntable or a position of the workpiece disposed on the turntable.

[Description of Drawings]

FIG. 1 is a schematic diagram illustrating an apparatus of detecting and compensating a rotational unbalance of a turntable of a machine tool according to an exemplary embodiment not forming part of the claimed invention.

FIG. 2 is a diagram illustrating a display screen of a control unit of an apparatus of compensating a rotational unbalance of a turntable according to an exemplary embodiment not forming part of the claimed invention.

FIG. 3 is a graph illustrating characteristics of rotational unbalance elements of a turntable according to an exemplary embodiment of the present invention.

FIG. 4 is a graph illustrating a principle of calculating a phase of an unbalance compensation mass using a vibration velocity and a rotation pulse signal of a turntable according to an exemplary embodiment of the present invention.

FIG. 5 is a flow chart illustrating a compensation method of a rotation unbalance of a turntable according to an exemplary embodiment of the present invention.

FIG. 6 is a conceptual diagram illustrating a compensation of a rotation unbalance using one position on a turntable according to an exemplary embodiment of the present invention.

FIG. 7 is a table illustrating calculation of a compensation mass, a compensation distance, and a compensation phase angle when compensating a rotation unbalance using two positions on a turntable according to an exemplary embodiment of the present invention.

FIG. 8 is a conceptual diagram illustrating a compensation of a rotation unbalance using two positions on a turntable according to an exemplary embodiment of the present invention.

[Detailed Description of Exemplary Embodiments of Invention]

The following description is merely exemplary in nature and is not intended to limit the present invention, application, or uses. It should be understood that throughout the drawings, corresponding reference numerals indicate like or corresponding units and features.

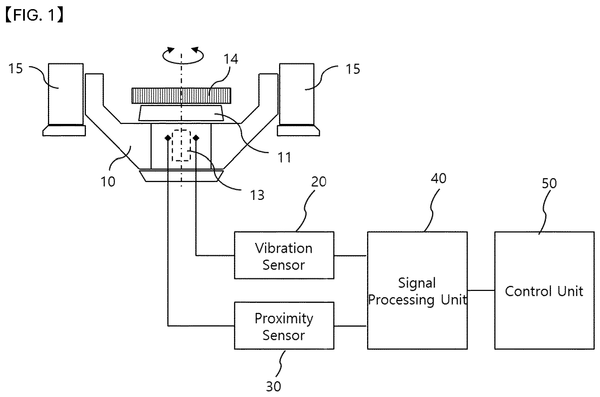

Hereinafter, exemplary preferred embodiments of the present invention are described in detail with reference to FIGS. 1 to 8.

As shown in FIG. 1, an apparatus of compensating a rotational unbalance of a turntable of a machine tool according to an exemplary embodiment of the present disclosure may include a turntable 11 which is mounted on an upper portion of a table body 10 of the machine tool and rotatable by a table motor 13. The turntable 11 may include fixtures (not shown) and a pallet 14 on an upper portion thereof to hold a workpiece.

The turntable 11 may be installed in a horizontal direction on the table body 10 and perform a high-speed rotation and an angle-divided rotation with respect to a rotating shaft in a vertical direction by the table motor 13 configured as a servo motor at a lower portion of the table body 10.

In addition, the rotating shaft of the turntable 11 may be tilted within a certain angle range by a tilting motor 15 installed on one side of the table body 10.

A vibration sensor 20 to detect vibration of the turntable 11 and a proximity sensor 30 to detect a number of rotations of the turntable 11 may be installed on one side of the table body 10. The vibration sensor 20 may be attached to the table body 10 at a position where vibration measurement is easy when the turntable 11 rotates.

The proximity sensor 30 may be installed at a position adjacent to the turntable 11, and a dog (not shown) may be installed on an outside of a rotating part of the turntable 11 adjacent to the proximity sensor 30 to generate a pulse signal in the proximity sensor 30 when approaching the proximity sensor 30. Therefore, whenever the turntable 11 rotates once, the proximity sensor 30 may output one pulse so that the number of rotations of the turntable 11 may be counted.

The apparatus of compensating a rotational unbalance of a turntable of a machine tool according to an exemplary embodiment of the present disclosure may include a signal processing unit 40 that is equipped with a central processing unit (CPU) (not shown) to analyze signals detected from the vibration sensor 20 and the proximity sensor 30 at high speed, analyzing rotational unbalance characteristics information of the turntable 11.

The rotational unbalance characteristics information analyzed in the signal processing unit 40 may mean an unbalance mass generated at a radial distance at a specific phase angle of the turntable 11 when the turntable 11 rotates at a preset reference rotational speed (usually 100 RPM, which is 1 x component).

The apparatus of compensating a rotational unbalance of a turntable of a machine tool according to an exemplary embodiment of the present disclosure may include a control unit 50 that outputs rotational unbalance information of the turntable 11 received from the signal processing unit 40, inputs parameters for compensating the rotational unbalance of the turntable 11 in response to the rotational unbalance information, and calculates rotational unbalance compensation parameters by applying the input parameters

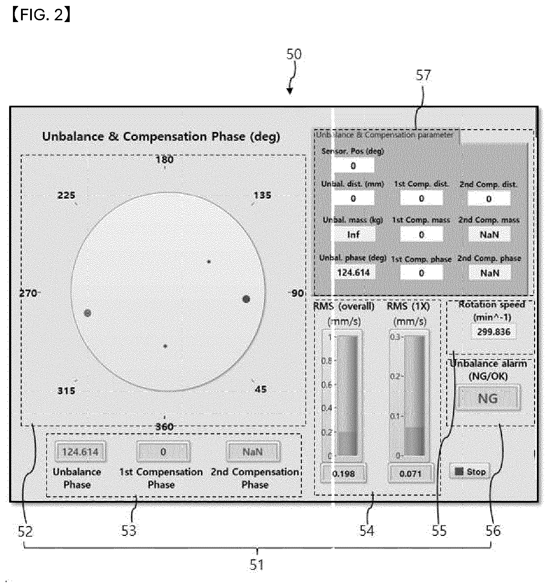

The control unit 50, as shown in FIG. 2, may include an output part 51 that outputs rotational unbalance information of the turntable 11 received from the signal processing unit 40, and an input and output display part 57 that inputs predetermined parameters for compensating rotational unbalance of the turntable 11, and calculates remaining parameters that have not been entered by applying the parameters being input to a predetermined formula and outputs calculated results.

More specifically, the output part 51 of the control unit 50 may include a turntable display part 52 that displays a rotation unbalance position and a compensation position of the turntable 11, a phase angle display part 53 that displays an unbalance phase angle and a compensation phase angle, a vibration velocity display part 54 that displays a magnitude of a velocity of the vibration, a rotational speed display part 55 that displays a rotational speed of the turntable 11, and an alarm display part 56 that displays an alarm message when a rotational unbalance size of the turntable 11 exceeds a predetermined range.

The input and output display part 57 of the control unit 50 may be configured to display an unbalance distance corresponding to a radius of the turntable 11 that is input in advance, and an unbalance mass and an unbalance phase angle calculated by the signal processing unit 40, wherein the parameters to correct or compensate the rotational unbalance may be selectively input from a compensation distance, a compensation mass and a compensation phase angle, and when one or two parameters among these parameters being input are entered, the other parameters are calculated by pre-stored formulas and output to be displayed.

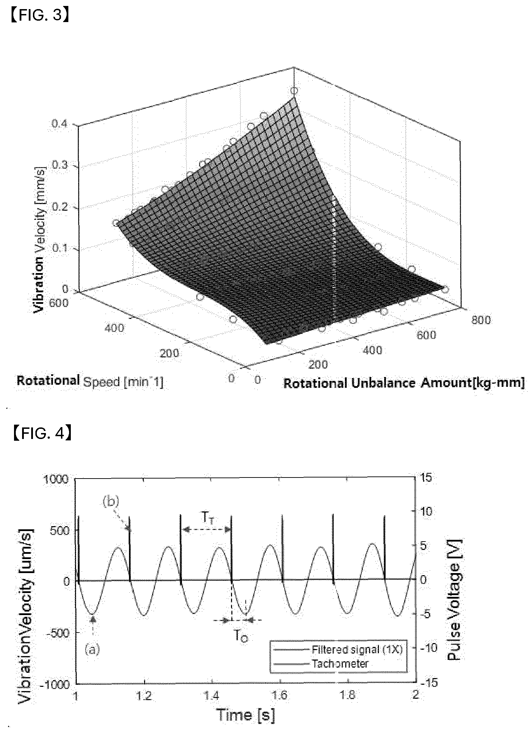

Hereinafter, referring to FIG. 3, a process of analyzing the signals acquired from the vibration sensor 20 and proximity sensor 30 into rotational unbalance information of the turntable 11 in the signal processing device 40 will be described.

As shown in FIG. 3, the vibration signal detected by the vibration sensor 20 may be illustrated in the form of a graph having properties of a vibration velocity, a rotational speed, and a rotational unbalance amount through the signal processing unit 40. This vibration signal may be converted into a Root Mean Square (RMS) value that corresponds to a frequency of a reference rotational speed of 100 RPM. Accordingly, the rotational unbalance amount is calculated by substituting these values of the rotational speed and the vibration speed into a rotational unbalance approximation equation of Formula 1 below.

<Formula 1>

$$U = \alpha_{10}V + \alpha_{01}\Omega + \alpha_{20}V^2 + \alpha_{02}\Omega^2 + \alpha_{11}V\Omega + C$$

where U denotes a rotational unbalance amount [kg · m], V denotes a vibration velocity (1 x RMS value of the component) [m/s], $\Omega$ denotes a rotational speed of the turntable [min$^{-1}$], C denotes a constant, and $\alpha_n$ denotes a coefficient.

In addition, this rotational unbalance amount (U) means that an unbalance mass exists at a radial distance of the turntable 11 when the turntable 11 normally rotates at 100 RPM of the 1 x component, so it is desirable to calculate and record data on the rotational unbalance amount (U) in advance for each vibration velocity range through an experimental formula, utilizing the data.

Meanwhile, the rotational unbalance amount (U) means that an unbalance mass (m) exists at a radial distance (r) of the turntable 11, and the unbalance mass (m) is calculated by the rotational unbalance amount (U) using Formula 2 below.

<Formula 2>

$$U = m\ r, \text{ and therefore } m = U\ /\ r$$

where U is a rotational unbalance amount [kg m], m is an unbalance mass [kg], and r is a radial distance of the unbalance mass, which is a radial distance of the turntable.

Next, a process of calculating the phase angle of the compensation mass (m) will be described. The rotational unbalance means that an unbalance mass (m) exists at a radial distance (r) at a specific phase angle of the turntable 11. To compensate the rotational unbalance, a compensation mass should be installed at a position of the phase angle opposite to an unbalance phase angle. In other words, a position of the phase angle of the compensation mass becomes an opposite position rotated 180 degrees from the unbalance phase angle.

The phase angle of the compensation mass may be calculated by comparing a vibration velocity signal (a) obtained in the signal processing device 40 through the vibration signal provided from the vibration sensor 20 with a time difference between peaks of a pulse signal (b) generated from the proximity sensor 30 each time the turntable 11 rotates once, as shown in the graph of FIG. 4.

Specifically, the phase angle of the compensation mass may be obtained by calculating a ratio of the time difference between the peaks of the vibration velocity signal (a) to a period of the pulse signal (b) that occurs when the turntable 11 rotates 360 degrees. This phase angle of the compensation mass is calculated using Formula 3 below.

$$<\text{Formula 3}>$$
$$\varepsilon_0 = -\frac{T_0}{T_T} \times 360 + \theta_v$$

where $\varepsilon_0$ is a phase angle of a compensation mass [deg], $T_0$ is a time difference between maximum peaks of a vibration signal [sec], $T_T$ is a period of one rotation of a turntable [sec], and $\theta_v$ is a shifting phase angle [deg] according to a velocity conversion of acceleration detected by a vibration sensor.

As seen in the above Formula 3, a more accurate phase angle ($\varepsilon_0$) of the compensation mass is a value that reflects the shifting phase angle [deg] according to a speed conversion of the acceleration detected by the vibration sensor 20.

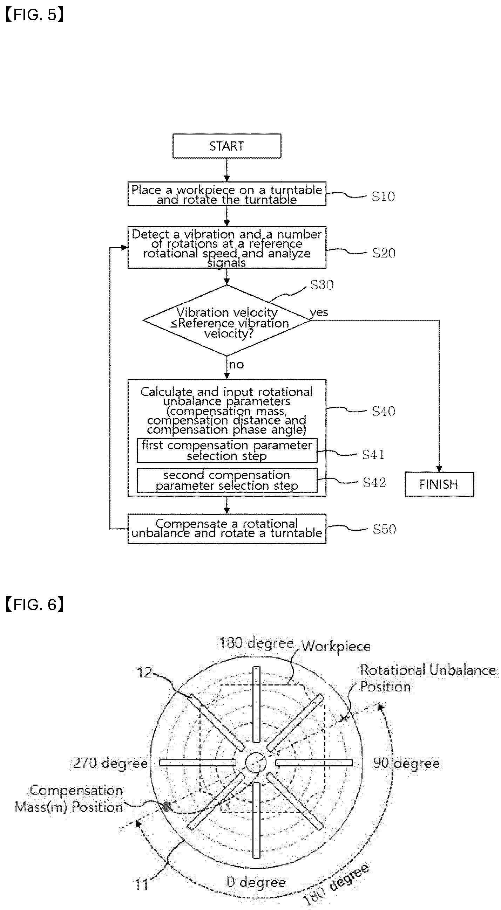

Hereinafter, a process for compensating a rotational unbalance of a turntable 11 will be described with reference to FIGS. 5 and 6. As shown in FIGS. 5 and 6, when a rotational unbalance occurs in the turntable 11 carrying a workpiece, a compensation work of the rotational unbalance will be performed through the following processes.

First, a turntable rotation step (S10) is executed.

In this step, a turntable 11 on which a workpiece is placed is rotated at a preset reference speed by driving a table motor 13.

Next, a signal analysis step (S20) is executed.

In this step (S20), a vibration signal and a number of rotation (RPM) of the turntable 11 rotating together with a workpiece are received through a vibration sensor 20 and a proximity sensor 30 in the signal processing device 40, in which the vibration signal is converted into a vibration velocity (a vibration velocity is an RMS value corresponding to a frequency of a preset reference rotational speed) through a signal processing procedure, and a rotational unbalance of the turntable 11 is calculated using the predetermined unbalance approximation Formula 1 based on the vibration velocity and the number of rotation.

Next, a compensation determination step (S30) is executed.

In this step (S30), the vibration velocity analyzed in the signal analysis step (S20) is compared with the preset reference vibration velocity. When the vibration velocity of the turntable 11 is smaller than the reference vibration velocity, the rotational unbalance amount of the turntable 11 is negligible, so a compensation work of the rotational unbalance of the turntable 11 is terminated. However, when the vibration velocity of the turntable 11 is greater than the reference vibration velocity, a next step for compensating the rotational unbalance of the turntable 11 is executed.

Next, a rotational unbalance compensation parameter calculation step (S40) is executed.

In this step (S40), when the vibration velocity of the turntable 11 is greater than the reference vibration velocity in the compensation determination step (S30), a compensation mass for compensating a rotational unbalance analyzed in the signal analysis step (S20), a compensation distance and a compensation phase angle for installing the compensation mass is calculated.

Here, the compensation mass is calculated using the Formula 2, the compensation phase angle is calculated using the Formula 3, and the compensation distance is determined by the radial distance of the turntable 11.

Meantime, when an installation position of the compensation mass is not appropriate, the compensation distance may be arbitrarily changed and input through the input and output display part 57 of the control unit 50, and then the compensation mass is changed and calculated using the Formula 2 according to the changed compensation distance. The changed compensation mass is output through the input and output display part 57 of the control unit 50.

Next, a rotational unbalance compensation step (S50) is executed.

In this step (S50), the compensation mass is installed on the turntable 11 according to the compensation parameters (a compensation mass, a compensation distance, and a compensation phase angle) calculated in the rotational unbalance compensation parameter calculation step (S40), and then the procedure returns to the signal analysis step (S20) while rotating the turntable 11 at a preset reference speed.

Meanwhile, as another exemplary embodiment of the present invention, it is preferable to install the compensation mass on a slot 12 formed at a constant equiangular angle on the turntable 11 in the rotational unbalance compensation step (S50). However, there are cases where the phase angle at which the compensation mass is to be installed does not correspond to a position where the slot 12 is formed, or the compensation mass may not be installed at a position calculated in the rotational unbalance compensation parameter calculation step (S40) due to a structure of the workpiece placed on the turntable 11. In this case, the compensation mass is divided into two parts and installed at two positions of the slot 12 where the compensation mass may be installed on the turntable 11, in which a vector sum of the compensation masses divided and installed at the two positions is balanced with the rotational unbalance amount, thereby compensating the rotational unbalance.

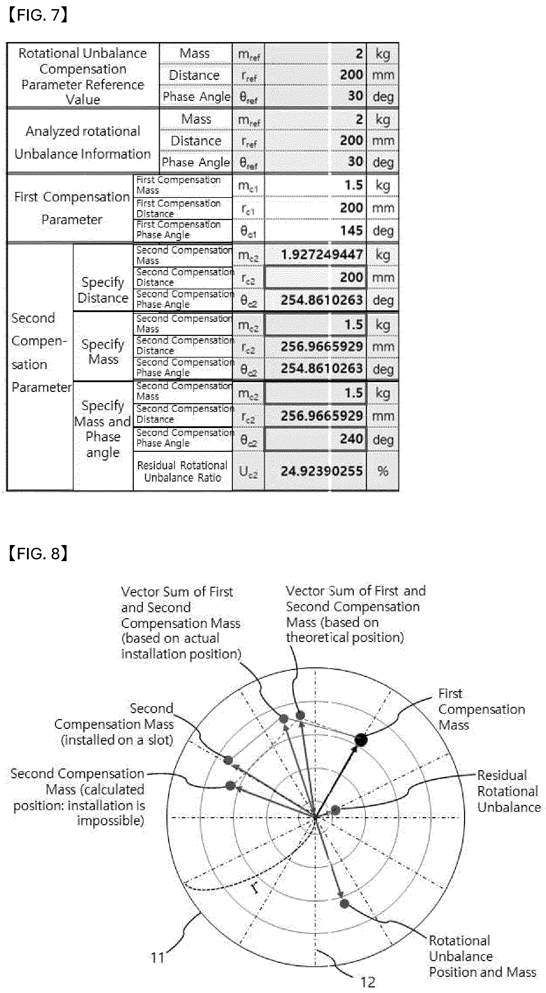

Hereinafter, referring to FIGS. 7 and 8, a method of dividing and installing the compensation mass for compensating the rotational unbalance at two points in the rotation unbalance compensation parameter calculation step (S40) will be described.

A method of dividing and installing the compensation mass into two positions may be performed by executing a first compensation parameter selection step (S41).

In this step (S41), a first compensation mass having a weight smaller than the compensation mass calculated in the signal analysis step (S20) is arbitrarily determined, an angle of an adjacent slot 12 from a position approximately 180 degrees opposite to the unbalance phase angle is determined as a first phase angle, and a first compensation distance for installing the first compensation mass is arbitrarily specified and is input into the input and output display part 57 of the control unit 50.

Next, a second compensation parameter selection step (S42) is executed.

This step is a step for determining a parameter for a second compensation mass using a predefined formula so that a vector sum with the first compensation mass input in the first compensation parameter selection step (S41) approaches the rotational unbalance amount. A method for determining the parameter for the second compensation mass may include a method for calculating a second compensation mass and a second phase angle by specifying and inputting a second compensation distance using the predetermined Formulas 2 and 3, a method for calculating a second compensation distance and a second phase angle by specifying and inputting a second compensation mass, or a method for calculating a second compensation distance by specifying and inputting a second compensation mass and a second phase angle.

Here, in the method of specifying and inputting the second compensation mass and the second phase angle, as shown in FIG. 8, the second compensation mass is selected from among already standardized compensation masses, and the second phase angle is determined based on a predetermined slot 12 of the turntable 11.

Meanwhile, the second compensation distance calculated based on the second compensation mass and the second phase angle may exceed the radial distance of the turntable 11. However, in fact, since the second compensation distance at which the actual second compensation mass may be installed may not exceed the radial distance of the turntable 11, the second compensation distance is limited to the radial distance of the turntable 11.

Accordingly, when the calculated second compensation distance exceeds the radial distance of the turntable 11, a residual rotational unbalance amount may be generated by a distance exceeding the radial distance. However, such a residual rotational unbalance amount may be allowed within a range in which there is no need to compensate the rotational unbalance in the compensation determination step (S30). When the residual rotational unbalance amount exceeds the allowable range, it may be minimized by changing the second compensation mass and the second phase angle.

Next, by executing the rotational unbalance compensation step (S50), it is possible to compensate the unbalance of the turntable 11 by installing the first compensation mass and the second compensation mass in response to the rotational unbalance compensation parameters calculated in the first compensation parameter selection step (S41) and the second compensation parameter selection step (S42).

As discussed in the exemplary embodiments of the present invention in the above, a rotational unbalance amount may be calculated based on a vibration signal and a rotation signal of a turntable 11 of a machine tool, a rotational unbalance compensation parameter may then be calculated based on the rotational unbalance amount, and therefore it is possible to accurately and quickly perform compensation of the rotational unbalance of the turntable 11 of the machine tool.

Further, the present invention may compensate the rotational unbalance of the turntable at a time by easily calculating the compensation parameter for at least two positions as well as one position, thereby enabling compensation of the rotational unbalance of the turntable 11 regardless of a structure of the turntable or a position of the workpiece placed on the turntable 11.

[Explanation of Signs]

10: table body
11: turntable
12: slot
13: table motor
14: pallet
15: tilting motor
20: vibration sensor
30: proximity sensor
40: signal processing unit
50: control unit
51: output part
52: turntable display part
53: phase angle display part
54: vibration velocity display part
55: rotational speed display part
56: alarm display part
57: input and output display part
S10: turntable rotation step
S20: signal analysis step
S30: compensation determination step
S40: rotational unbalance compensation parameter calculation step
S41: first compensation parameter selection step
S42: second compensation parameter selection step
S50: rotational unbalance compensation step

**Claims**

1. A method of compensating a rotational unbalance of a turntable (11) of a machine tool, comprising:

a turntable rotation step (S10) that rotates the turntable (11) at a preset reference speed;
a signal analysis step (S20) that receives a vibration signal and a number of rotations of the turntable (11) through a vibration sensor (20) and a proximity sensor (30), converts the vibration signal into a vibration velocity through a signal processing procedure, and calculates a rotational unbalance of the turntable (11) based on the vibration velocity and the number of rotations;
a compensation determination step (S30) that compares the vibration velocity analyzed in the signal analysis step (S20) with the preset reference vibration velocity, terminates a compensation work of the rotational unbalance of the turntable (11) when the vibration velocity of the turntable (11) is smaller than the reference vibration velocity, and proceeds a next step for compensating the rotational unbalance of the turntable (11) when the vibration velocity of the turntable (11) is greater than the reference vibration velocity;
a rotational unbalance compensation parameter calculation step (S40) that calculates a compensation mass, a compensation distance, and a compensation phase angle for compensating a rotational unbalance amount when the vibration velocity of the turntable (11) is greater than the reference vibration velocity in the compensation determination step (S30); and
a rotational unbalance compensation step (S50) that installs the compensation mass on the turntable (11) in response to the compensation mass, the compensation distance, and the compensation phase angle calculated in the rotational unbalance compensation parameter calculation step (S40), and returns to the signal analysis step (S20) by rotating the turntable (11) at a preset reference speed,
wherein the rotational unbalance amount of the turntable (11) in the signal analysis step (S20) is calculated using the formula 1 below,

<Formula 1>
$$U = \alpha_{10}V + \alpha_{01}\Omega + \alpha_{20}V^2 + \alpha_{02}\Omega^2 + \alpha_{11}V\Omega + C$$

where U denotes a rotational unbalance amount [kg · m], V denotes a vibration velocity (1 x RMS value of the component)[m/s], $\Omega$ denotes a rotational speed of the turntable [min$^{-1}$], C denotes a constant, and $\alpha_n$ denotes a coefficient,

wherein in the rotational unbalance compensation parameter calculation step (S40), the compensation mass is calculated using Formula 2 below, the compensation phase angle is calculated using Formula 3 below, and the compensation distance is defined as a radial distance of the turntable,

<Formula 2>

$$U = m\,r, \text{ and therefore } m = U / r$$

where U is a rotational unbalance amount [kg m], m is an unbalance mass [kg], and r is a radial distance of the unbalance mass, which is a radial distance of the turntable,

<Formula 3>

$$\varepsilon_0 = -\frac{T_0}{T_T} \times 360 + \theta_v$$

where $\varepsilon_0$ is a phase angle of a compensation mass [deg], $T_0$ is a time difference between maximum peaks of a vibration signal [sec], $T_T$ is a period of one rotation of a turntable [sec], and $\theta_v$ is a shifting phase angle [deg] according to a velocity conversion of acceleration detected by a vibration sensor.

2. The method of claim 1, wherein the compensation mass calculated in the rotational unbalance compensation parameter calculation step (S40) is divided into two positions on the turntable (11), and a vector sum of the compensation mass divided into two positions is balanced with a rotational unbalance amount.

3. The method of claim 2, wherein dividing of the compensation mass into two positions includes:

a first compensation parameter selection step (S41) in which a first compensation mass having a weight smaller than the compensation mass calculated in the signal analysis step (S20) is arbitrarily determined, an angle of an adjacent slot (12) from a position approximately 180 degrees opposite to an unbalance phase angle is determined as a first phase angle, and a first compensation distance for installing the first compensation mass is arbitrarily specified and input; and
a second compensation parameter selection step (S42) in which a second compensation mass, a second compensation distance, and a second phase angle are calculated by a predefined formula so that a vector sum with the first compensation mass being input in the first compensation parameter selection step (S41) approaches the rotational unbalance amount.

4. The method of claim 3, wherein the second compensation parameter selection step (S42) calculates the second compensation mass and the second phase angle by specifying the second compensation distance and inputting the same into a predefined formula.

5. The method of claim 3, wherein the second compensation parameter selection step (S42) calculates the second compensation distance and the second phase angle by specifying the second compensation mass and inputting the same into a predefined formula.

6. The method of claim 3, wherein the second compensation parameter selection step (S42) calculates the second compensation distance by specifying the second compensation mass and the second phase angle and inputting the same into a predefined formula.

7. The method of claim 6, wherein the second compensation mass is selected from among pre-standardized compensation masses, the second phase angle may be selected based on a pre-determined slot (12) of a turntable (11), and the calculated second compensation distance may be limited to the radial distance of the turntable (11).

**Patentansprüche**

1. Verfahren zum Kompensieren einer Drehunwucht eines Drehtischs (11) einer Werkzeugmaschine, umfassend:

einen Drehtischdrehschritt (S10), der den Drehtisch (11) mit einer voreingestellten Referenzgeschwindigkeit dreht;

einen Signalanalyseschritt (S20), der ein Vibrationssignal und eine Anzahl von Drehungen des Drehtischs (11) durch einen Vibrationssensor (20) und einen Näherungssensor (30) empfängt, das Vibrationssignal durch eine Signalverarbeitungsprozedur in eine Vibrationsgeschwindigkeit umwandelt, und eine Drehunwucht des Drehtischs (11) basierend auf der Vibrationsgeschwindigkeit und der Anzahl von Drehungen berechnet;

einen Kompensationsbestimmungsschritt (S30), der die in dem Signalanalyseschritt (S20) analysierte Vibrationsgeschwindigkeit mit der voreingestellten Referenzvibrationsgeschwindigkeit vergleicht, eine Kompensationsarbeit der Drehunwucht des Drehtischs (11) beendet, wenn die Vibrationsgeschwindigkeit des Drehtischs (11) kleiner als die Referenzvibrationsgeschwindigkeit ist, und zu einen nächsten Schritt zum Kompensieren der Drehunwucht des Drehtischs (11) fortschreitet, wenn die Vibrationsgeschwindigkeit des Drehtischs (11) größer als die Referenzvibrationsgeschwindigkeit ist;

einen Drehunwuchtkompensationsparameterberechnungsschritt (S40), der eine Kompensationsmasse, einen Kompensationsabstand und einen Kompensationsphasenwinkel zum Kompensieren eines Drehunwuchtbetrags berechnet, wenn die Vibrationsgeschwindigkeit des Drehtischs (11) größer als die Referenzvibrationsgeschwindigkeit in dem Kompensationsbestimmungsschritt (S30) ist; und

einen Drehunwuchtkompensationsschritt (S50), der die Kompensationsmasse auf dem Drehtisch (11) als Reaktion auf die Kompensationsmasse, den Kompensationsabstand und den Kompensationsphasenwinkel, die in dem Drehunwuchtkompensationsparameterberechnungsschritt (S40) berechnet werden, installiert und zu dem Signalanalyseschritt (S20) durch Drehen des Drehtischs (11) mit einer voreingestellten Referenzgeschwindigkeit zurückkehrt,

wobei der Drehunwuchtbetrag des Drehtischs (11) in dem Signalanalyseschritt (S20) unter Verwendung der nachstehenden Formel 1 berechnet wird,

<Formel 1>

$$U = \alpha_{10}V + \alpha_{01}\Omega + \alpha_{20}V^2 + \alpha_{02}\Omega^2 + \alpha_{11}V\Omega + C$$

wobei U einen Drehunwuchtbetrag [kg · m] bezeichnet, V eine Vibrationsgeschwindigkeit (1 × RMS-Wert der Komponente)[m/s] bezeichnet, $\Omega$ eine Drehgeschwindigkeit des Drehtischs [min$^{-1}$] bezeichnet, C eine Konstante bezeichnet und $\alpha_n$ einen Koeffizienten bezeichnet,

wobei in dem Drehunwuchtkompensationsparameterberechnungsschritt (S40) die Kompensationsmasse unter Verwendung der nachstehenden Formel 2 berechnet wird, der Kompensationsphasenwinkel unter Verwendung der nachstehenden Formel 3 berechnet wird und der Kompensationsabstand als ein radialer Abstand des Drehtischs definiert ist,

<Formel 2>

$$U = m\,r \text{ und daher } m = U/r$$

wobei U ein Drehunwuchtbetrag [kg·m] ist, m eine Unwuchtmasse [kg] ist und r ein radialer Abstand der Unwuchtmasse, der ein radialer Abstand des Drehtischs ist, ist,

<Formel 3>

$$\varepsilon_0 = -\frac{T_0}{T_T} \times 360 + \theta_v$$

wobei $\varepsilon_0$ ein Phasenwinkel einer Kompensationsmasse [Grad] ist, $T_0$ eine Zeitdifferenz zwischen maximalen Spitzen eines Vibrationssignals [Sek] ist, $T_T$ eine Periode einer Umdrehung eines Drehtischs [Sek] ist und $\theta_v$ ein Verschiebungsphasenwinkel [Grad] gemäß einer Geschwindigkeitsumwandlung einer Beschleunigung, die durch einen Vibrationssensor detektiert wird, ist.

2. Verfahren nach Anspruch 1, wobei die Kompensationsmasse, die in dem Drehunwuchtkompensationsparameter berechnungsschritt (S40) berechnet wird, in zwei Positionen auf dem Drehtisch (11) unterteilt wird, und eine Vektorsumme der Kompensationsmasse, die in zwei Positionen unterteilt wird, mit einem Drehunwuchtbetrag ausgeglichen wird.

3. Verfahren nach Anspruch 2, wobei das Unterteilen der Kompensationsmasse in zwei Positionen umfasst:

einen ersten Kompensationsparameterauswahlschritt (S41), in dem eine erste Kompensationsmasse, die ein Gewicht aufweist, das kleiner als die Kompensationsmasse ist, die in dem Signalanalyseschritt (S20) berechnet wird, beliebig bestimmt wird, ein Winkel eines benachbarten Schlitzes (12) von einer Position, die ungefähr 180 Grad entgegengesetzt zu einem Unwuchtphasenwinkel ist, als ein erster Phasenwinkel bestimmt wird, und ein erster Kompensationsabstand zum Installieren der ersten Kompensationsmasse beliebig spezifiziert und eingegeben wird; und

einen zweiten Kompensationsparameterauswahlschritt (S42), in dem eine zweite Kompensationsmasse, ein zweiter Kompensationsabstand und ein zweiter Phasenwinkel durch eine vordefinierte Formel berechnet werden, so dass sich eine Vektorsumme mit der ersten Kompensationsmasse, die in dem ersten Kompensationsparameterauswahlschritt (S41) eingegeben wird, dem Drehunwuchtbetrag nähert.

4. Verfahren nach Anspruch 3, wobei der zweite Kompensationsparameterauswahlschritt (S42) die zweite Kompensationsmasse und den zweiten Phasenwinkel durch Spezifizieren des zweiten Kompensationsabstands und Eingeben desselben in eine vordefinierte Formel berechnet.

5. Verfahren nach Anspruch 3, wobei der zweite Kompensationsparameterauswahlschritt (S42) den zweiten Kompensationsabstand und den zweiten Phasenwinkel durch Spezifizieren der zweiten Kompensationsmasse und Eingeben desselben in eine vordefinierte Formel berechnet.

6. Verfahren nach Anspruch 3, wobei der zweite Kompensationsparameterauswahlschritt (S42) den zweiten Kompensationsabstand durch Spezifizieren der zweiten Kompensationsmasse und des zweiten Phasenwinkels und Eingeben desselben in eine vordefinierte Formel berechnet.

7. Verfahren nach Anspruch 6, wobei die zweite Kompensationsmasse aus vorstandardisierten Kompensationsmassen ausgewählt wird, der zweite Phasenwinkel basierend auf einem vorbestimmten Schlitz (12) eines Drehtischs (11) ausgewählt werden kann und der berechnete zweite Kompensationsabstand auf den radialen Abstand des Drehtischs (11) beschränkt werden kann.

**Revendications**

1. Procédé de compensation d'un déséquilibre rotatif d'une table tournante (11) d'une machine-outil, comprenant :

une étape de rotation de la table tournante (S10) où la table tournante (11) est entraînée en rotation à une vitesse de référence prédéfinie ;

une étape d'analyse de signal (S20) où sont reçus un signal de vibration et un nombre de rotations de la table tournante (11) au moyen d'un capteur de vibrations (20) et d'un capteur de proximité (30), où le signal de vibration est converti en une vitesse de vibration au moyen d'une procédure de traitement de signal, et où un déséquilibre de rotation de la table tournante (11) est calculé sur la base de la vitesse de vibration et du nombre de rotations ;

une étape de détermination de compensation (S30) où la vitesse de vibration analysée lors de l'étape d'analyse de signal (S20) est comparée avec la vitesse de vibration de référence prédéfinie, un travail de compensation du déséquilibre rotatif de la table tournante (11) est arrêté si la vitesse de vibration de la table tournante (11) est inférieure à la vitesse de vibration de référence, et où il est passé à une étape suivante pour compenser le déséquilibre rotatif de la table tournante (11) si la vitesse de vibration de la table tournante (11) est supérieure à la vitesse de vibration de référence ;

une étape de calcul de paramètre de compensation de déséquilibre rotatif (S40) où sont calculés une masse de compensation, une distance de compensation et un angle de phase de compensation pour compenser une valeur de déséquilibre rotatif si la vitesse de vibration de la table tournante (11) est supérieure à la vitesse de vibration de référence lors de l'étape de détermination de compensation (S30) ; et

une étape de compensation de déséquilibre rotatif (S50) où la masse de compensation est installée sur la table tournante (11) en réaction à la masse de compensation, à la distance de compensation et à l'angle de phase de compensation calculés lors de l'étape de calcul de paramètre de compensation de déséquilibre rotatif (S40), et où il est retourné lors de l'étape d'analyse de signal (S20) par rotation du plateau rotatif (11) à une vitesse de référence prédéfinie,

où la valeur de déséquilibre rotatif de la table tournante (11) lors de l'étape d'analyse de signal (S20) est calculée au moyen de la formule 1 ci-dessous :

<Formule 1>

$$U = \alpha_{10}V + \alpha_{01}\Omega + \alpha_{20}V^2 + \alpha_{02}\Omega^2 + \alpha_{11}V\Omega + C$$

où U désigne une valeur de déséquilibre rotatif [kg • m], V désigne une vitesse de vibration (1 x valeur efficace du composant) [m/s], $\Omega$ indique une vitesse de rotation de la table tournante [min$^{-1}$], C indique une constante et $\alpha_n$ indique un coefficient,

où lors de l'étape de calcul du paramètre de compensation de déséquilibre rotatif (S40), la masse de compensation est calculée au moyen de la formule 2 ci-dessous, l'angle de phase de compensation est calculé au moyen de la formule 3 ci-dessous, et la distance de compensation est définie en tant que distance radiale de la table tournante,

<Formule 2>

$$U = m\ r, \text{ et par conséquent } m = U/r$$

où U est une valeur de déséquilibre rotatif [kg m], m est une masse de déséquilibre [kg], et r est une distance radiale de la masse de déséquilibre, laquelle est une distance radiale de la table tournante,

<Formule 3>

$$\varepsilon_0 = -\frac{T_0}{T_T} \times 360 + \theta_v$$

où $\varepsilon_0$ est un angle de phase d'une masse de compensation [deg], $T_0$ est une différence temporelle entre les crêtes maximales d'un signal de vibration [sec], $T_T$ est une période d'une rotation d'une table tournante [sec], et $\theta_v$ est un angle de déphasage [deg] en fonction d'une conversion de vitesse d'accélération détectée par un capteur de vibration.

2. Procédé selon la revendication 1, où la masse de compensation calculée lors de l'étape de calcul du paramètre de compensation de déséquilibre rotatif (S40) est divisée en deux positions sur la table tournante (11), et une somme vectorielle de la masse de compensation divisée en deux positions est équilibrée avec une valeur de déséquilibre rotatif.

3. Procédé selon la revendication 2, où la division de la masse de compensation en deux positions comprend :

une première étape de sélection de paramètre de compensation (S41) où une première masse de compensation ayant un poids inférieur à la masse de compensation calculée lors de l'étape d'analyse de signal (S20) est déterminée arbitrairement, un angle d'une fente adjacente (12) à un emplacement opposé sensiblement de 180 degrés à un angle de phase de déséquilibre est déterminé en tant que premier angle de phase, et une première distance de compensation pour installer la première masse de compensation est spécifiée arbitrairement et entrée ; et
une deuxième étape de sélection de paramètre de compensation (S42) où une deuxième masse de compensation, une deuxième distance de compensation, et un deuxième angle de phase sont calculés avec une formule prédéfinie de sorte qu'une somme vectorielle avec la première masse de compensation entrée lors de la première étape de sélection de paramètre de compensation (S41) approche la valeur de déséquilibre rotatif.

4. Procédé selon la revendication 3, où la deuxième étape de sélection de paramètre de compensation (S42) calcule la deuxième masse de compensation et le deuxième angle de phase en spécifiant la deuxième distance de compensation et en entrant celle-ci dans une formule prédéfinie.

5. Procédé selon la revendication 3, où la deuxième étape de sélection de paramètre de compensation (S42) calcule la deuxième distance de compensation et le deuxième angle de phase en spécifiant la deuxième masse de compensation et en entrant celle-ci dans une formule prédéfinie.

6. Procédé selon la revendication 3, où la deuxième étape de sélection de paramètre de compensation (S42) calcule la deuxième distance de compensation en spécifiant la deuxième masse de compensation et le deuxième angle de phase et en les entrant dans une formule prédéfinie.

7. Procédé selon la revendication 6, où la deuxième masse de compensation est sélectionnée parmi des masses de compensation pré-normalisées, le deuxième angle de phase peut être sélectionné sur la base d'une fente prédéterminée (12) d'une table tournante (11), et la deuxième distance de compensation calculée peut être limitée à la distance radiale de la table tournante (11).

【FIG. 1】

【FIG. 2】

【FIG. 3】

【FIG. 4】

【FIG. 5】

```
                    ┌─────────────┐
                    │    START    │
                    └──────┬──────┘
                           ↓
        ┌──────────────────────────────────┐
        │ Place a workpiece on a turntable  │──── S10
        │      and rotate the turntable     │
        └──────────────────┬───────────────┘
                           ↓
        ┌──────────────────────────────────┐
        │ Detect a vibration and a number   │
   ┌───→│    of rotations at a reference    │──── S20
   │    │   rotational speed and analyze    │
   │    │             signals               │
   │    └──────────────────┬───────────────┘
   │                       ↓           S30
   │               ╱───────────────╲
   │              ╱ Vibration velocity╲   yes
   │             ⟨  ≤Reference vibration ⟩──────────────┐
   │              ╲     velocity?      ╱                │
   │               ╲───────┬─────────╱                  │
   │                       │no                          │
   │                       ↓                            │
   │    ┌──────────────────────────────────┐            │
   │    │   Calculate and input rotational  │            │
   │    │      unbalance parameters         │──── S40    │
   │    │      (compensation mass,          │            │
   │    │   compensation distance and       │            │
   │    │    compensation phase angle)      │            │
   │    │ ┌──────────────────────────────┐  │            │
   │    │ │ first compensation parameter │  │──── S41    │
   │    │ │        selection step        │  │            ↓
   │    │ └──────────────────────────────┘  │      ┌──────────┐
   │    │ ┌──────────────────────────────┐  │      │  FINISH  │
   │    │ │   second compensation        │  │──S42 └──────────┘
   │    │ │  parameter selection step    │  │
   │    │ └──────────────────────────────┘  │
   │    └──────────────────┬───────────────┘
   │                       ↓
   │    ┌──────────────────────────────────┐
   └────│     Compensate a rotational       │──── S50
        │  unbalance and rotate a turntable │
        └──────────────────────────────────┘
```

【FIG. 6】

【FIG. 7】

| Rotational Unbalance Compensation Parameter Reference Value | | Mass | $m_{ref}$ | | 2 | kg |
|---|---|---|---|---|---|---|
| | | Distance | $r_{ref}$ | | 200 | mm |
| | | Phase Angle | $\theta_{ref}$ | | 30 | deg |
| Analyzed rotational Unbalance Information | | Mass | $m_{ref}$ | | 2 | kg |
| | | Distance | $r_{ref}$ | | 200 | mm |
| | | Phase Angle | $\theta_{ref}$ | | 30 | deg |
| First Compensation Parameter | | First Compensation Mass | $m_{c1}$ | | 1.5 | kg |
| | | First Compensation Distance | $r_{c1}$ | | 200 | mm |
| | | First Compensation Phase Angle | $\theta_{c1}$ | | 145 | deg |
| Second Compen-sation Parameter | Specify Distance | Second Compensation Mass | $m_{c2}$ | 1.927249447 | | kg |
| | | Second Compensation Distance | $r_{c2}$ | | 200 | mm |
| | | Second Compensation Phase Angle | $\theta_{c2}$ | 254.8610263 | | deg |
| | Specify Mass | Second Compensation Mass | $m_{c2}$ | | 1.5 | kg |
| | | Second Compensation Distance | $r_{c2}$ | 256.9665929 | | mm |
| | | Second Compensation Phase Angle | $\theta_{c2}$ | 254.8610263 | | deg |
| | Specify Mass and Phase angle | Second Compensation Mass | $m_{c2}$ | | 1.5 | kg |
| | | Second Compensation Distance | $r_{c2}$ | 256.9665929 | | mm |
| | | Second Compensation Phase Angle | $\theta_{c2}$ | | 240 | deg |
| | | Residual Rotational Unbalance Ratio | $U_{c2}$ | 24.92390255 | | % |

【FIG. 8】

Vector Sum of First and Second Compensation Mass (based on actual installation position)

Vector Sum of First and Second Compensation Mass (based on theoretical position)

First Compensation Mass

Second Compensation Mass (installed on a slot)

Second Compensation Mass (calculated position: installation is impossible)

Residual Rotational Unbalance

Rotational Unbalance Position and Mass

11

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120121489 A
- KR 101654740 B1
- KR 20200092602 A
- US 5412583 A